# EUROPEAN PATENT SPECIFICATION

(11) **EP 3 967 606 B1**
(45) Date of publication and mention of the grant of the patent: **10.01.2024**
(21) Application number: 20195366.8
(22) Date of filing: 09.09.2020
(51) Int. Cl.: B64D 27/08, B64C 27/02, F02B 75/28, F02B 75/20, F02B 75/06, F02B 61/04, F16M 1/021, F02B 75/00, B64C 27/82, F01B 1/10, F01B 21/02

(54) **ROTORCRAFT**
DREHFLÜGLER
GIRAVION

(43) Date of publication of application: 16.03.2022
(73) Proprietor: Robby Moto Engineering S.r.l., 26041 Casalmaggiore (CR) (IT)
(72) Inventor: PAPETTI, Roberto, 26041 Casalmaggiore (CR) (IT)
(74) Representative: Brunacci, Marco

(56) References cited:
- EP-A1- 2 947 014
- EP-A1- 3 222 518
- WO-A2-2005/086563
- US-A- 3 721 405
- US-A1- 2007 095 973
- Anonymous: "One Engine With Two Hearts Being Designed for Light Helicopters, UAVs and Fixed Wing", , 22 February 2016 (2016-02-22), XP055589834, Retrieved from the Internet: URL:https://www.aviationpros.com/aircraft/ rotorcraft/article/12151978/one-engine-wit h-two-hearts-being-designed-for-light-heli copters-uavs-and-fixed-wing [retrieved on 2019-05-17]

## Description

### Technical Field

The present invention relates to a rotorcraft.

### Background Art

It is well known that in flight mechanics the term "lift" is used to indicate the component of the force acting on an aircraft that allows vertical lifting thereof during take-off and sustaining it during the flight phase.

The propulsion force is the component of the force acting on the aircraft that allows it to move forward when in flight and which is directed transversely to the lift.

A rotorcraft is a particular type of aircraft in which the lift is generated by the setting in rotation of a rotor, i.e. a device provided with a set of blades mounted on a hub associated rotatable with the rotorcraft chassis.

The rotorcrafts are different from another type of aircraft, the air vehicles, because in the latter the lift is generated by the air relative motion along the external surface of fixed elements, i.e. the wings.

The propulsion force is generated by the setting in rotation of one or more propellers through a driving unit.

Within the ambit of this treatise, reference is made to a particular type of rotorcraft commonly known as gyrocopter.

With the exception of the take-off phase only, the rotor of a gyrocopter is not motorized and the respective blades are set in rotation by the aerodynamic flow that invests the rotor itself during flight.

The rotor is usually positioned in the upper portion of the gyrocopter and its axis of rotation is substantially vertical when the gyrocopter is stationary on the ground.

The gyrocopter is provided with a propeller connected to an engine assembly that provides the propulsion force necessary to move the gyrocopter.

The propeller can be of the pushing or pulling type.

Usually, the propeller is of the pushing type and is positioned at the point where the tail of the gyrocopter is located with its own axis of rotation which is positioned horizontally when the gyrocopter is stationary on the ground.

During the take-off phase, the engine assembly is usually connected both to the rotor and to the propeller, in order to generate the lift necessary to facilitate the vertical lifting of the gyrocopter.

As soon as the gyrocopter has reached the desired lift conditions, the engine assembly is disconnected from the rotor and remains connected only to the propeller.

Gyrocopters of known type do however have some drawbacks.

First of all, the aforementioned gyrocopters cannot be controlled easily and safely in all flight conditions, especially in case of engine assembly failure.

In particular, if the gyrocopter is no longer driven by the propulsion force generated by the engine, or to a lesser extent than optimal conditions, the rotor is no longer affected by the air flow that allows it to rotate.

In such circumstances the gyrocopter can easily lose altitude or fly in random and irregular trajectories or even fall.

In these cases it is necessary to perform a kinetic energy recovery maneuver that is not always possible in all flight conditions.

Secondly, gyrocopters of known type do not always meet the safety standards required for flying in certain areas of the territory, such as e.g. population centers or water areas.

Specifically, the gyrocopters of known type are not provided with an adequate redundancy system that allows continuing the flight and/or landing safely in case of engine assembly failure.

Rotorcrafts of the known type are also known from patent documents WO2005/086563A2, US3721405A, US2007/095973A1, EP3222518A1, EP2947014A1 and from the document *"One Engine With Two Hearts Being Designed for Light Helicopter, UAVs and Fixed Wing".*

### Description of the Invention

The main aim of the present invention is to devise a rotorcraft that allows to be controlled in an easy and safe way in every flight condition, also in the case of a possible failure of the engine assembly.

Another object of the present invention is to devise a rotorcraft that complies with the safety standards required for flying in most areas of the territory, even in the event of the flight areas being of the type of population centers and/or water areas.

Another object of the present invention is to devise a rotorcraft that allows overcoming the aforementioned drawbacks of the prior art in a simple, rational, easy, effective to use and low cost solution.

The objects set out above are achieved by the present rotorcraft having the characteristics of claim 1.

### Brief Description of the Drawings

Other characteristics and advantages of the present invention will be more evident from the description of a preferred, but not exclusive, embodiment of a rotorcraft, illustrated by way of an indicative, yet non-limiting example, in the attached tables of drawings in which:

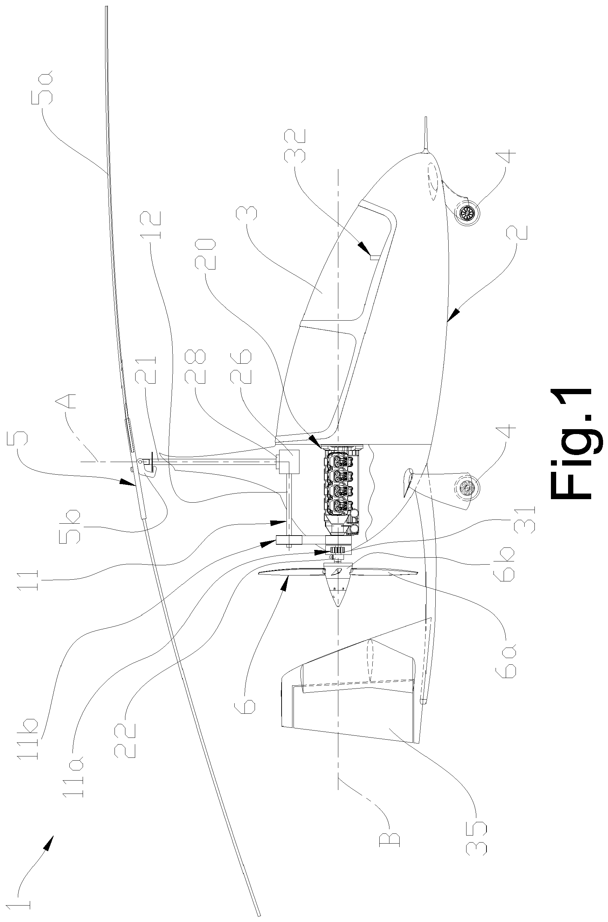

Figure 1 is a side view of a rotorcraft according to the invention;

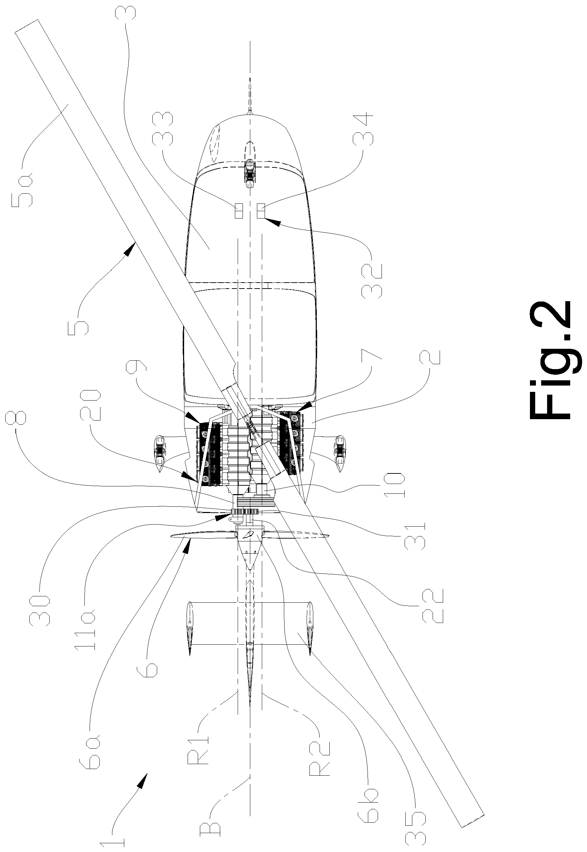

Figure 2 is a view from above of the rotorcraft according to the invention;

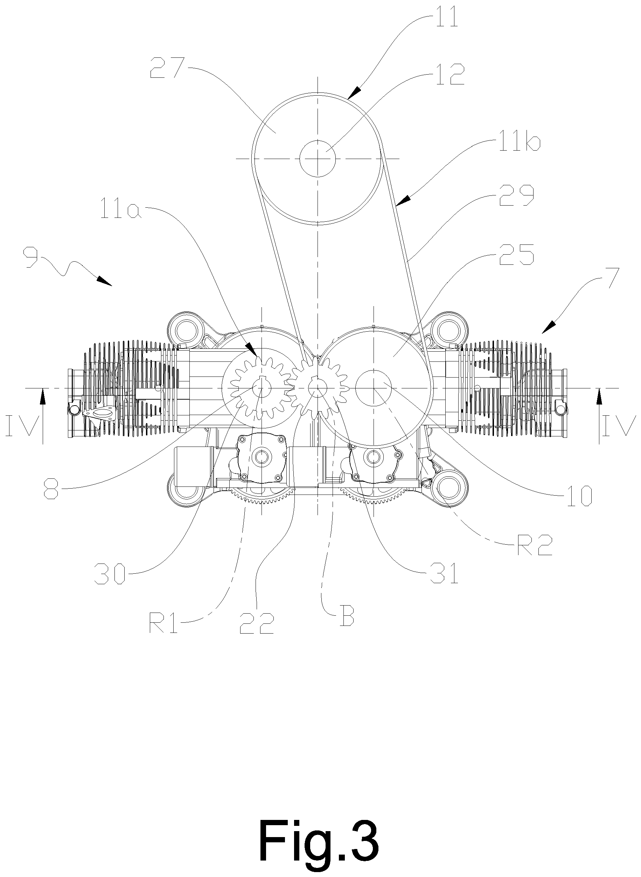

Figure 3 is a front view of some components of the rotorcraft according to the invention;

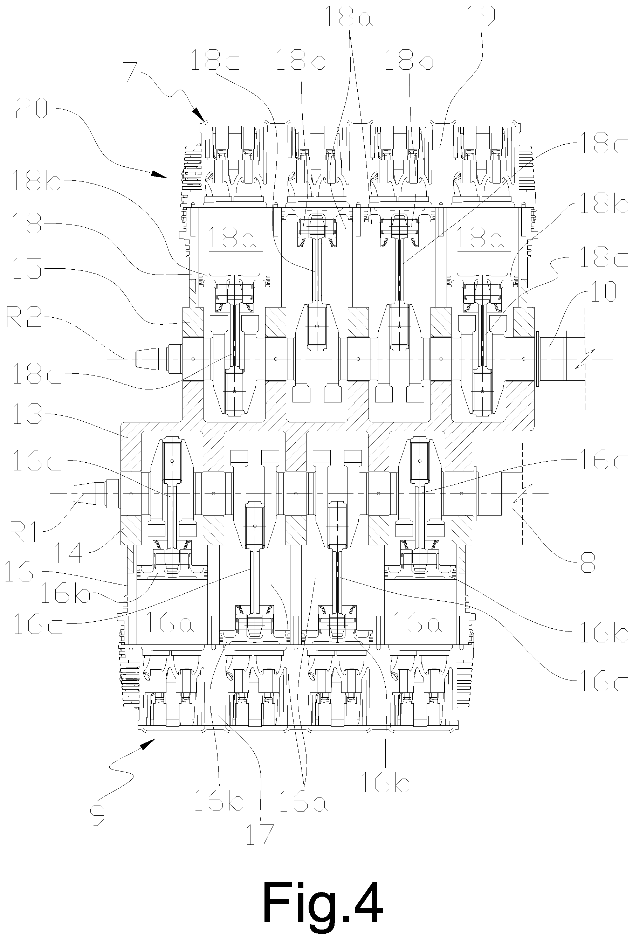

Figure 4 is a sectional view along the plane IV - IV of Figure 3 of some components of the rotorcraft according to the invention;

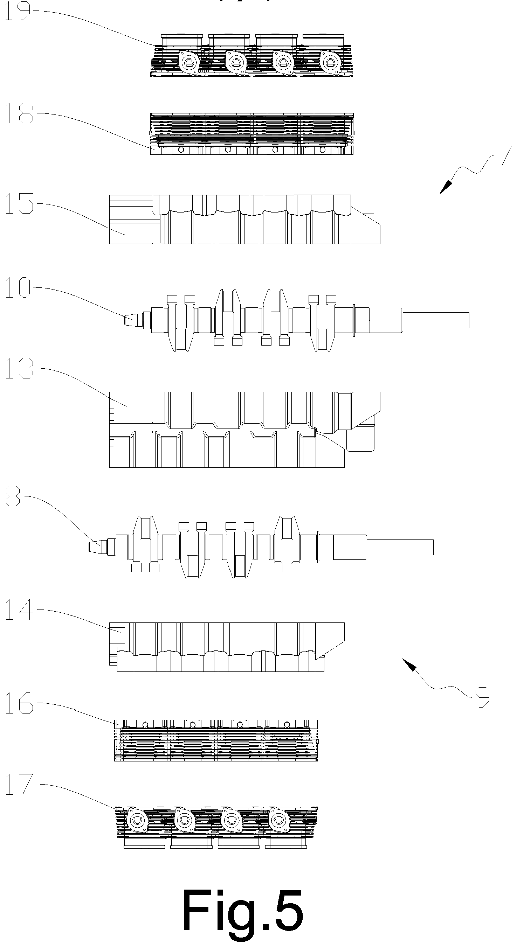

Figure 5 is an exploded view of some components of the rotorcraft according to the invention.

### Embodiments of the Invention

With particular reference to these figures, reference numeral 1 globally indicates a rotorcraft.

In the present discussion it has been assumed that the rotorcraft 1 is of the type of a gyrocopter in ground stationary condition.

Therefore, the terms "horizontal" and "vertical", as well as the terms derived therefrom, must relate to the aforementioned condition.

The rotorcraft 1 comprises at least one basic chassis 2.

The basic chassis 2 is provided with a cockpit 3 and with ground movement means 4 of the rotorcraft 1.

In particular, the ground movement means 4 are used during the maneuvers of the rotorcraft 1 on the ground and during take-off and landing operations. Preferably, the ground movement means 4 comprise a plurality of horizontal axis wheels.

The rotorcraft 1 comprises:
- at least one main rotor 5 associated with the basic chassis 2 and movable in rotation around a main axis A to generate at least one in-flight maintaining force of the rotorcraft 1;
- at least one propeller 6 associated with the basic chassis 2 and movable in rotation around a secondary axis B transverse to the main axis A to generate at least one propulsion force to move the rotorcraft 1 when it is maintained in flight.

The main rotor 5 is mounted on a substantially vertical first rotation shaft 21 and associated rotatable with the basic chassis 2 at the point where the cockpit 3 is located.

The main axis A coincides with the longitudinal axis of the first rotation shaft 21.

The main rotor 5 comprises a plurality of main blade elements 5a mounted on a main hub 5b with which the main rotor 5 is provided.

The main hub 5b is mounted on the first rotation shaft 21.

Thanks to the setting in rotation of the first rotation shaft 21 around the main axis A, the main rotor 5 generates a force on the rotorcraft 1 which is commonly known as "lift" and which is directed in the opposite direction to the weight force.

Additionally, the rotorcraft 1 comprises an adjustment device, not shown in the figures, which is adapted to adjust the collective pitch of the blade elements 5a and through which it is possible to vary the intensity of the lift generated by the main rotor 5.

During the take-off phase the lift allows the vertical lifting of the rotorcraft 1 and, therefore, it is usually required to have a high nominal value.

For this reason the main rotor 5 is set in rotation by an engine, as will be described in detail below.

During the flight phase lift is ensured, at least partly, by the autorotation of the main rotor 5, which is set into rotation by the airflow that contacts the external surface of the main blade elements 5a during the forward movement of the rotorcraft 1 through the air.

In particular, during flight, the torque generated by the main rotor 5 is counteracted by a centerboard 35, consisting e.g. of a rear rudder mounted on the basic chassis 2, which is affected by the airflow.

The propeller 6 is mounted on a second rotation shaft 22 substantially horizontal and associated rotatable with the basic chassis 2.

The secondary axis B coincides with the longitudinal axis of the second rotation shaft 22.

The propeller 6 comprises a plurality of secondary blade elements 6a mounted on a secondary hub 6b with which the propeller 6 is provided.

The secondary hub 6b is substantially hollow and is mounted on the second rotation shaft 22.

In the particular embodiment shown in the figures the propeller 6 is of the pushing type and, therefore, the second rotation shaft 22 is positioned at the point where the tail of the rotorcraft 1 is located.

Alternative embodiments cannot however be ruled out wherein the propeller 6 is of the pulling type; in this case the second rotation shaft 22 is positioned at the point where the nose of the rotorcraft 1 is located.

Thanks to the setting in rotation of the propeller 6 around the secondary axis B, a thrust is generated that operates on the rotorcraft 1 and allows it to move forward when in flight or during the movement thereof on the ground.

The aforementioned thrust, commonly known as propulsion force, is directed transversely to the lift and, specifically, is directed along a substantially horizontal direction.

As will be described in detail below, the propeller 6 is mechanically moved in rotation and is always maintained in rotation during the use of the rotorcraft 1. The rotorcraft 1 conveniently comprises at least one engine assembly 20 associated with the basic chassis 2 and adapted to move the main rotor 5 and the propeller 6 in rotation.

According to the invention, the engine assembly 20 comprises:
- at least one first piston engine 9 for setting in rotation a first crankshaft 8 with which the engine assembly 20 is provided, the propeller 6 being associated with the first crankshaft 8;
- at least one second piston engine 7 for setting in rotation a second crankshaft 10 with which the engine assembly 20 is provided, the main rotor 5 being associated with the second crankshaft 10.

The first crankshaft 8 and the second crankshaft 10 are rotatable around a first rotational axis R1 and a second rotational axis R2, respectively, which are both substantially horizontal.

Alternative arrangements, not claimed, cannot however be ruled out wherein the crankshafts 8, 10 are different from each other; for example, the crankshafts 8, 10 can be mounted so that, e.g., the rotational axes R1, R2 are both arranged substantially vertically.

The first engine 9 and the second engine 7 run independently, i.e. it is possible to operate each engine 7, 9 independently from the other engine 7, 9 and adjust the operation thereof.

As will be described below, depending on flight requirements, the actuation and operation of the main rotor 5 and of the propeller 6 can be adjusted separately.

According to the invention, the engine assembly 20 comprises at least one central engine block 13, at least one first lateral engine block 14 and at least one second lateral engine block 15.

The first crankshaft 8 is housed between the first lateral engine block 14 and the central engine block 13 and the second crankshaft 10 is housed between the second lateral engine block 15 and the central engine block 13.

The first engine 9 comprises a first group 16 of first cylinders 16a in which a plurality of first pistons 16b operating the first crankshaft 8 are housed sliding.

The first group 16 is associated with the first lateral engine block 14.

Likewise, the second engine 7 comprises a second group 18 of second cylinders 18a in which a plurality of second pistons 18b operating the second crankshaft 10 are housed sliding.

The second group 18 is associated with the second lateral engine block 15.

Preferably, both the first group 16 and the second group 18 consist of a single set of components and are associated with the first lateral engine block 14 and with the second lateral engine block 15, respectively, during assembly, e.g. by means of screws, bolts or the like.

Alternative embodiments cannot however be ruled out wherein the first group 16 and the first lateral engine block 14 are made in a single body piece and/or wherein the second group 18 and the second lateral engine block 15 are made in a single body piece.

The first pistons 16b, as a result of the sliding thereof inside the first cylinders 16a, operate the first crankshaft 8 in rotation through corresponding first connecting rods 16c which are positioned between the first pistons 16b and the first crankshaft 8.

Similarly, the second pistons 18b, as a result of the sliding thereof inside the second cylinders 18a, operate the second crankshaft 10 in rotation through corresponding second connecting rods 18c which are positioned between the second pistons 18b and the second crankshaft 10.

Preferably, the first cylinders 16a and the second cylinders 18a are arranged horizontally, i.e. they define a substantially horizontal sliding direction of the pistons 16b, 18b.

Alternative embodiments cannot however be ruled out wherein the first cylinders 16a and the second cylinders 18a are arranged vertically and wherein the sliding directions of the first cylinders 16a and of the second cylinders 18a are substantially vertical.

Conveniently, the first engine 9 comprises at least one first head 17 for the closure of the first cylinders 16a which is associated with the first group 16. Likewise, the second engine 7 comprises at least one second head 19 for the closure of the second cylinders 18a which is associated with the second group 18.

Preferably, the first head 17 and the second head 19 house the intake and exhaust valves, respectively, of each first cylinder 16a and of each second cylinder 18a, respectively.

The first head 17 and the second head 19 are associated with the first group 16 and with the second group 18, respectively, during assembly e.g. by means of screws, bolts or the like.

According to the invention, the rotorcraft 1 comprises a motion drive train 11 from the engine assembly 20 to the main rotor 5 and to the propeller 6, the drive train 11 being associated with the basic chassis 2.

According to the invention, the drive train 11 comprises:
- at least one first drive train 11a adapted to transmit motion from the first crankshaft 8 to the propeller 6;
- at least one second drive train 11b adapted to transmit motion from the second crankshaft 10 to the main rotor 5.

According to the invention, the first drive train 11a comprises at least one first gear wheel 30, mounted on the first crankshaft 8, and at least one second gear wheel 31 meshed to the first gear wheel 30 and mounted on the second rotation shaft 22.

In alternative configurations, not claimed, the transmission of motion from the first engine 9 to the propeller 6 takes place through a keyed coupling positioned between the first crankshaft 8 and the second rotation shaft 22; in other words, the first crankshaft 8 and the second rotation shaft 22 rotate around the same axis of rotation, i.e. the secondary axis B and the first rotational axis R1 are substantially coincident.

According to the invention, the second drive train 11b comprises:
- at least one driving pulley 25 keyed to the second crankshaft 10;
- at least one driven pulley 27 mounted on a substantially horizontal driving shaft 12, with which the second drive train 11b is provided;
- at least one flexible element 29 closed on itself in a loop and wound partly around the driving pulley 25 and partly around the driven pulley 27;
- at least one transmission unit 26 positioned between the driving shaft 12 and the first rotation shaft 21.

The transmission unit 26 allows transforming the horizontal rotary motion of the driving shaft 12 into vertical motion, so as to allow the setting in rotation of the first rotation shaft 21.

For example, the transmission unit 26 comprises e.g. bevel gears.

The second drive train 11b conveniently comprises at least one freewheel mechanism 28 adapted to allow decoupling the main rotor 5 from the second crankshaft 10.

The freewheel mechanism 28 is positioned, e.g., between the transmission unit 26 and the first rotation shaft 21 and allows decoupling the first rotation shaft 21 from the second engine 7.

This way, the main rotor 5 can rotate in autorotation when flight conditions require and/or allow it.

The rotorcraft 1 conveniently comprises adjustment means 32 for adjusting the power delivered by the engine assembly 20.

The adjustment means 32 are associated with the basic chassis 2.

Preferably, the adjustment means 32 comprise:
- at least one first throttle element 33 adapted to operate the first engine 9 and to adjust the power delivered by the first engine 9 after it has been operated;
- at least one second throttle element 34 adapted to operate the second engine 7 and to adjust the power delivered by the second engine 7 after it has been operated.

Precisely, the first throttle element 33 and the second throttle element 34 are positioned inside the cockpit 3 and can be operated by the pilot of the rotorcraft 1.

The first throttle element 33 can be positioned in a first configuration of use wherein the first engine 9 is off and in a plurality of second configurations of use wherein the first engine 9 is on and delivers different powers.

Likewise, the second throttle element 34 can be positioned in a first configuration of use wherein the second engine 7 is off and in a plurality of second configurations of use wherein the second engine 7 is on and delivers different powers.

The pilot can operate the first engine 9 separately from the second engine 7 and can adjust the power delivered by them independently, depending on the needs encountered during the flight.

For example, during the take-off phase the second engine 7 is turned on and it is made to run at high power, so that it sets the main rotor 5 in rotation at high speed to develop the lift needed for take-off.

At the same time, the first engine 9 is driven to operate the propeller 6 in rotation.

During the flight phase, if the first engine 9 delivers a high power, the main rotor 5 is able to rotate in autorotation and therefore it can be useful to reduce the power of the second engine 7, or even turn it off.

In case the first engine 9 registers a fault or a blockage the pilot is able to land safely the rotorcraft 1 by means of the power delivered by the second engine 7. This way the main rotor 5 can continue to rotate thus allowing the pilot to land the rotorcraft 1 safely.

According to an alternative embodiment of the rotorcraft 1, not shown in the figures, the adjustment means 32 comprise:
- at least one operating lever of the first engine 9 and of the second engine 7;
- at least one electronic control device to control the power delivered by the first engine 9 and by the second engine 7 when operated by the operating lever.

In this case, the pilot operates the first engine 9 and the second engine 7 simultaneously through the operating lever and adjusts the power output thereof through the electronic control device.

The electronic control device is of the type, e.g., of an on-board computer through which the pilot adjusts the power delivered by the first engine 9 and by the second engine 7 according to the needs and flight conditions previously described.

## Claims

1. Rotorcraft (1) comprising:
- at least one basic chassis (2);
- at least one main rotor (5) associated with said basic chassis (2) and movable in rotation around a main axis (A) to generate at least one in-flight maintaining force of said rotorcraft (1), said main rotor (5) being mounted on a first rotation shaft (21);
- at least one propeller (6) associated with said basic chassis (2) and movable in rotation around a secondary axis (B) transverse to said main axis (A) to generate at least one propulsion force to move said rotorcraft (1) when it is maintained in flight, said propeller (6) being mounted on a second rotation shaft (22);
- at least one engine assembly (20) associated with said basic chassis (2) and adapted to move said main rotor (5) and said propeller (6) in rotation, said engine assembly (20) comprising:
- at least one first piston engine (9) for setting in rotation a first crankshaft (8) with which said engine assembly (20) is provided, said propeller (6) being associated with said first crankshaft (8);
- at least one second piston engine (7) for setting in rotation a second crankshaft (10) with which said engine assembly (20) is provided, said main rotor (5) being associated with said second crankshaft (10);
- a motion drive train (11) from said engine assembly (20) to said main rotor (5) and to said propeller (6), said drive train (11) being associated with said basic chassis (2) and comprising:
- at least one first drive train (11a) adapted to transmit motion from said first crankshaft (8) to said propeller (6);
- at least one second drive train (11b) adapted to transmit motion from said second crankshaft (10) to said main rotor (5);
**characterized by** the fact that:
- said engine assembly (20) comprises at least one central engine block (13), at least one first lateral engine block (14) and at least one second lateral engine block (15), said first crankshaft (8) being housed between said first lateral engine block (14) and said central engine block (13) and said second crankshaft (10) being housed between said second lateral engine block (15) and said central engine block (13);
- said first engine (9) comprises a first group (16) of first cylinders (16a) in which a plurality of first pistons (16b) operating said first crankshaft (8) are housed sliding, said first group (16) being associated with said first lateral engine block (14);
- said second engine (7) comprises a second group (18) of second cylinders (18a) in which a plurality of second pistons (18b) operating said second crankshaft (10) are housed sliding, said second group (18) being associated with said second lateral engine block (15);
- said first engine (9) comprises at least one first head (17) for the closure of said first cylinders (16a) associated with said first group (16);
- said second engine (7) comprises at least one second head (19) for the closure of said second cylinders (18a) associated with said second group (18);
- said first crankshaft (8) and said second crankshaft (10) are rotatable around a first rotational axis (R1) and a second rotational axis (R2), respectively, which are both substantially horizontal and mutually parallel;
- said first drive train (11a) comprises at least one first gear wheel (30), mounted on said first crankshaft (8), and at least one second gear wheel (31) meshed to said first gear wheel (30) and mounted on said second rotation shaft (22);
- said second drive train (11b) comprises:
- at least one driving pulley (25) keyed to said second crankshaft (10);
- at least one driven pulley (27) mounted on a substantially horizontal driving shaft (12), with which said second drive train (11b) is provided;
- at least one flexible element (29) closed on itself in a loop and wound partly around said driving pulley (25) and partly around said driven pulley (27);
- at least one transmission unit (26) positioned between said driving shaft (12) and said first rotation shaft (21).

2. Rotorcraft (1) according claim 1, **characterized by** the fact that said second drive train (11b) comprises at least one freewheel mechanism (28) adapted to allow decoupling said main rotor (5) from said second crankshaft (10).

3. Rotorcraft (1) according to one or more of the preceding claims, **characterized by** the fact that it comprises adjustment means (32) for adjusting the power delivered by said engine assembly (20), said adjustment means (32) being associated with said basic chassis (2).

4. Rotorcraft (1) according to claim 3, **characterized by** the fact that said adjustment means (32) comprise:
- at least one first throttle element (33) adapted to operate said first engine (9) and to adjust the power delivered by said first engine (9) after it has been operated;
- at least one second throttle element (34) adapted to operate said second engine (7) and to adjust the power delivered by said second engine (7) after it has been operated.

5. Rotorcraft (1) according to claim 3, **characterized by**
the fact that said adjustment means (32) comprise:
- at least one operating lever of said first engine (9) and of said second engine (7);
- at least one electronic control device to control the power delivered by said first engine (9) and by said second engine (7) when operated by said operating lever.

## Patentansprüche

1. Drehflügler (1), umfassend:
- mindestens ein Grundchassis (2);
- mindestens einen Hauptrotor (5), der dem Grundchassis (2) zugeordnet und um eine Hauptachse (A) drehbar ist, um mindestens eine Flug-Haltekraft des Drehflüglers (1) zu erzeugen, wobei der Hauptrotor (5) auf einer ersten Drehwelle (21) montiert ist;
- mindestens einen Propeller (6), der dem Grundchassis (2) zugeordnet und um eine Sekundärachse (B) quer zur Hauptachse (A) drehbar ist, um mindestens eine Vortriebskraft zu erzeugen, um den Drehflügler (1) zu bewegen, wenn er im Flug gehalten wird, wobei der Propeller (6) auf einer zweiten Drehwelle (22) montiert ist;
- mindestens eine Motorbaugruppe (20), die dem Grundchassis (2) zugeordnet und geeignet ist, den Hauptrotor (5) und den Propeller (6) in Drehung zu versetzen, wobei die Motorbaugruppe (20) umfasst:
- mindestens einen ersten Kolbenmotor (9), um eine erste Kurbelwelle (8) in Drehung zu versetzen, mit der die Motorbaugruppe (20) versehen ist, wobei der Propeller (6) der ersten Kurbelwelle (8) zugeordnet ist;
- mindestens einen zweiten Kolbenmotor (7), um eine zweite Kurbelwelle (10), mit der die Motorbaugruppe (20) versehen ist, in Drehung zu versetzen, wobei der Hauptrotor (5) mit der zweiten Kurbelwelle (10) verbunden ist;
- einen Bewegungs-Antriebsstrang (11) von der Motorbaugruppe (20) zu dem Hauptrotor (5) und zu dem Propeller (6), wobei der Antriebsstrang (11) mit dem Grundchassis (2) verbunden ist und umfasst:
- mindestens einen ersten Antriebsstrang (11a), der ausgebildet ist, um Bewegung von der ersten Kurbelwelle (8) auf den Propeller (6) zu übertragen;
- mindestens einen zweiten Antriebsstrang (11b), der ausgebildet ist, um Bewegung von der zweiten Kurbelwelle (10) auf den Hauptrotor (5) zu übertragen;
**dadurch gekennzeichnet, dass**:
- die Motorbaugruppe (20) mindestens einen zentralen Motorblock (13), mindestens einen ersten seitlichen Motorblock (14) und mindestens einen zweiten seitlichen Motorblock (15) umfasst, wobei die erste Kurbelwelle (8) zwischen dem ersten seitlichen Motorblock (14) und dem zentralen Motorblock (13) untergebracht ist und die zweite Kurbelwelle (10) zwischen dem zweiten seitlichen Motorblock (15) und dem zentralen Motorblock (13) untergebracht ist;
- der erste Motor (9) eine erste Gruppe (16) von ersten Zylindern (16a) umfasst, in denen eine Vielzahl von ersten Kolben (16b), die die erste Kurbelwelle (8) betätigen, gleitend untergebracht sind, wobei die erste Gruppe (16) dem ersten seitlichen Motorblock (14) zugeordnet ist;
- der zweite Motor (7) eine zweite Gruppe (18) von zweiten Zylindern (18a) umfasst, in denen eine Vielzahl von zweiten Kolben (18b), die die zweite Kurbelwelle (10) betätigen, gleitend untergebracht sind, wobei die zweite Gruppe (18) dem zweiten seitlichen Motorblock (15) zugeordnet ist;
- der erste Motor (9) mindestens einen ersten Kopf (17) für den Verschluss der ersten Zylinder (16a) umfasst, die der ersten Gruppe (16) zugeordnet sind;
- der zweite Motor (7) mindestens einen zweiten Kopf (19) zum Schließen der zweiten Zylinder (18a) umfasst, die der zweiten Gruppe (18) zugeordnet sind;
- die erste Kurbelwelle (8) und die zweite Kurbelwelle (10) um eine erste Drehachse (R1) bzw. eine zweite Drehachse (R2) drehbar sind, die beide im Wesentlichen horizontal und zueinander parallel sind;
- der erste Antriebsstrang (11a) mindestens ein erstes Zahnrad (30) umfasst, das auf der ersten Kurbelwelle (8) montiert ist, und mindestens ein zweites Zahnrad (31), das mit dem ersten Zahnrad (30) kämmt und auf der zweiten Drehwelle (22) montiert ist;
- der zweite Antriebsstrang (11b) umfasst:
- mindestens eine treibende Antriebsscheibe (25), die mit der zweiten Kurbelwelle (10) verkeilt ist;
- mindestens eine angetriebene Antriebsscheibe (27), die auf einer im Wesentlichen horizontalen Antriebswelle (12) montiert ist, mit der der zweite Antriebsstrang (11b) versehen ist;
- mindestens ein flexibles Element (29), das in einer Schleife in sich geschlossen ist und teilweise um die treibende Antriebsscheibe (25) und teilweise um die angetriebene Antriebsscheibe (27) geschlungen ist;
- mindestens eine Getriebeeinheit (26), die zwischen der Antriebswelle (12) und der ersten Drehwelle (21) angeordnet ist.

2. Drehflügler (1) nach Anspruch 1, **dadurch gekennzeichnet, dass** der zweite Antriebsstrang (11b) mindestens einen Freilaufmechanismus (28) umfasst, der ausgebildet ist, um eine Entkopplung des Hauptrotors (5) von der zweiten Kurbelwelle (10) zu ermöglichen.

3. Drehflügler (1) nach einem oder mehreren der vorhergehenden Ansprüche, **dadurch gekennzeichnet, dass** er Einstellmittel (32) zum Einstellen der von der Motorbaugruppe (20) gelieferten Leistung umfasst, wobei die Einstellmittel (32) dem Grundchassis (2) zugeordnet sind.

4. Drehflügler (1) nach Anspruch 3, **dadurch gekennzeichnet, dass** die Einstellmittel (32) Folgendes umfassen:
- mindestens ein erstes Drosselelement (33), das ausgebildet ist, um den ersten Motor (9) zu betreiben und die von dem ersten Motor (9) abgegebene Leistung nach dessen Betrieb einzustellen
- mindestens ein zweites Drosselelement (34), das ausgebildet ist, um den zweiten Motor (7) zu betreiben und die vom zweiten Motor (7) abgegebene Leistung nach dessen Betrieb einzustellen.

5. Drehflügler (1) nach Anspruch 3, **dadurch gekennzeichnet, dass** die Einstellmittel (32) Folgendes umfassen:
- mindestens einen Betätigungshebel des ersten Motors (9) und des zweiten Motors (7);
- mindestens eine elektronische Steuervorrichtung zur Steuerung der von dem ersten Motor (9) und dem zweiten Motor (7) bei Betätigung durch den Betätigungshebel abgegebenen Leistung.

## Revendications

1. - Giravion (1) comprenant :
- au moins un châssis de base (2) ;
- au moins un rotor principal (5) associé audit châssis de base (2) et mobile en rotation autour d'un axe principal (A) pour générer au moins une force de maintien en vol dudit giravion (1), ledit rotor principal (5) étant monté sur un premier arbre de rotation (21) ;
- au moins une hélice (6) associée audit châssis de base (2) et mobile en rotation autour d'un axe secondaire (B) transversal audit axe principal (A) pour générer au moins une force de propulsion pour déplacer ledit giravion (1) lorsqu'il est maintenu en vol, ladite hélice (6) étant montée sur un second arbre de rotation (22) ;
- au moins un ensemble moteur (20) associé audit châssis de base (2) et agencé pour entraîner en rotation ledit rotor principal (5) et ladite hélice (6), ledit ensemble moteur (20) comprenant :
- au moins un premier moteur à piston (9) pour mettre en rotation un premier vilebrequin (8) dont est pourvu ledit ensemble moteur (20), ladite hélice (6) étant associée audit premier vilebrequin (8) ;
- au moins un second moteur à piston (7) pour mettre en rotation un second vilebrequin (10) dont est pourvu ledit ensemble moteur (20), ledit rotor principal (5) étant associé audit second vilebrequin (10) ;
- une transmission de mouvement (11) reliant ledit ensemble moteur (20) audit rotor principal (5) et à ladite hélice (6), ladite transmission (11) étant associée audit châssis de base (2) et comprenant :
- au moins une première transmission (11a) agencée pour transmettre un mouvement dudit premier vilebrequin (8) à ladite hélice (6) ;
- au moins une seconde transmission (11b) agencée pour transmettre un mouvement dudit second vilebrequin (10) audit rotor principal (5) ;
**caractérisé par le fait que** :
- ledit ensemble moteur (20) comprend au moins un bloc-moteur central (13), au moins un premier bloc-moteur latéral (14) et au moins un second bloc-moteur latéral (15), ledit premier vilebrequin (8) étant reçu entre ledit premier bloc-moteur latéral (14) et ledit bloc-moteur central (13) et ledit second vilebrequin (10) étant reçu entre ledit second bloc-moteur latéral (15) et ledit bloc-moteur central (13) ;
- ledit premier moteur (9) comprend un premier groupe (16) de premiers cylindres (16a) dans lesquels une pluralité de premiers pistons (16b) actionnant ledit premier vilebrequin (8) sont reçus de manière coulissante, ledit premier groupe (16) étant associé audit premier bloc-moteur latéral (14) ;
- ledit second moteur (7) comprend un second groupe (18) de seconds cylindres (18a) dans lesquels une pluralité de seconds pistons (18b) actionnant ledit second vilebrequin (10) sont reçus de manière coulissante, ledit second groupe (18) étant associé audit second bloc-moteur latéral (15) ;
- ledit premier moteur (9) comprend au moins une première culasse (17) pour la fermeture desdits premiers cylindres (16a) associés audit premier groupe (16) ;
- ledit second moteur (7) comprend au moins une seconde culasse (19) pour la fermeture desdits seconds cylindres (18a) associés audit second groupe (18) ;
- ledit premier vilebrequin (8) et ledit second vilebrequin (10) sont aptes à tourner autour d'un premier axe de rotation (R1) et d'un second axe de rotation (R2), respectivement, qui sont tous les deux sensiblement horizontaux et parallèles l'un à l'autre ;
- ladite première transmission (11a) comprend au moins une première roue dentée (30), montée sur ledit premier vilebrequin (8), et au moins une seconde roue dentée (31) engrenée avec ladite première roue dentée (30) et montée sur ledit second arbre de rotation (22) ;
- ladite seconde transmission (11b) comprend :
- au moins une poulie motrice (25) clavetée sur ledit second vilebrequin (10) ;
- au moins une poulie entraînée (27) montée sur un arbre d'entraînement (12) sensiblement horizontal, dont est pourvu ladite seconde transmission (11b) ;
- au moins un élément souple (29) fermé sur lui-même en une boucle et enroulé en partie autour de ladite poulie motrice (25) et en partie autour de ladite poulie entraînée (27) ;
- au moins une unité boîte de vitesses (26) positionnée entre ledit arbre d'entraînement (12) et ledit premier arbre de rotation (21).

2. - Giravion (1) selon la revendication 1, **caractérisé par le fait que** ladite seconde transmission (11b) comprend au moins un mécanisme de roue libre (28) agencé pour permettre de désaccoupler ledit rotor principal (5) vis-à-vis dudit second vilebrequin (10).

3. - Giravion (1) selon une ou plusieurs des revendications précédentes, **caractérisé par le fait qu'**il comprend des moyens de réglage (32) pour régler la puissance délivrée par ledit ensemble moteur (20), lesdits moyens de réglage (32) étant associés audit châssis de base (2) .

4. - Giravion (1) selon la revendication 3, **caractérisé par le fait que** lesdits moyens de réglage (32) comprennent :
- au moins un premier élément de commande de puissance (33) agencé pour actionner ledit premier moteur (9) et pour régler la puissance délivrée par ledit premier moteur (9) après avoir été actionné ;
- au moins un second élément de commande de puissance (34) agencé pour actionner ledit second moteur (7) et pour régler la puissance délivrée par ledit second moteur (7) après avoir été actionné.

5. - Giravion (1) selon la revendication 3, **caractérisé par le fait que** lesdits moyens de réglage (32) comprennent :
- au moins un levier d'actionnement dudit premier moteur (9) et dudit second moteur (7) ;
- au moins un dispositif de commande électronique pour commander la puissance délivrée par ledit premier moteur (9) et par ledit second moteur (7) lorsqu'ils sont actionnés par ledit levier d'actionnement.
